# EUROPÄISCHE PATENTSCHRIFT

(11) **EP 1 857 215 B1**
(45) Veröffentlichungstag und Bekanntmachung des Hinweises auf die Patenterteilung: **08.01.2014**
(21) Anmeldenummer: 07006814.3
(22) Anmeldetag: 02.04.2007
(51) Int. Cl.: C21D 9/00

(54) **Schweissbolzen**
Welding stud
Goujon de soudage

(30) Priorität: 03.04.2006 DE 102006015834; 26.09.2006 DE 202006014740 U; 23.11.2006 DE 202006017845 U
(43) Veröffentlichungstag der Anmeldung: 21.11.2007
(73) Patentinhaber: Köster & Co. GmbH, 58256 Ennepetal (DE)
(72) Erfinder: Mäckel, Ulrich, 58285 Gevelsberg (DE); Trillmich, Rainer, 58540 Meinerzhagen (DE)
(74) Vertreter: Sparing Röhl Henseler

(56) Entgegenhaltungen:
- EP-A- 1 155 769
- EP-A1- 0 857 534
- DE-A1- 1 558 882
- GB-A- 826 860
- GB-A- 1 471 740
- US-A- 4 987 288

## Beschreibung

Die Erfindung betrifft eine Stahllegierung als Material für einen Schweißbolzen.

Es ist bekannt, Gewindebolzen und Stifte aus niedrig legiertem Stahl, z.B. S235 nach EN 10025 durch Kaltumformung zu fertigen, so daß nach der Umformung die mechanischen Eigenschaften 4.8 (nach ISO 898) erreicht werden. Kopfbolzen als Verbindungselemente zwischen Stahl und Beton werden ebenfalls aus S235 oder ähnlichen, niedrig legierten Stahlsorten hergestellt und erreichen nach der Kaltumformung eine Festigkeit von 450 N/mm².

Für Anwendungen, bei denen höhere Festigkeiten gefordert werden, z.B. 8.8 (nach ISO 898), wird üblicherweise ein Stahl mit höherem Kohlenstoffgehalt, z.B. 0,35%, verwendet. Dieser läßt sich jedoch nicht bolzenschweißen, da der hohe Kohlenstoffgehalt zur Aufhärtung und damit zur Versprödung der Schweißzone führt. Somit sind viele Anwendungsbereiche, besonders im Maschinenbau, dem wirtschaftlichen Bolzenschweißverfahren nur eingeschränkt zugänglich.

Gewindebolzen und Stifte der Festigkeitsklasse 8.8 wurden bisher aus dem Werkstoff 19MnB4 hergestellt.

Nachteilig dabei ist, daß zur Verwendung des Werkstoffs als Schweißbolzen eine Wärmebehandlung erforderlich ist, wodurch diese teuer in der Herstellung sind. Ferner kann der Werkstoff einen so hohen Kohlenstoffgehalt aufweisen, daß die Gefahr der Aufhärtung besteht, der die Schweißeignung des Werkstoffs durch Bildung von Härterissen verringert. Unter Aufhärtung wird eine Härtesteigerung verstanden, die entsteht, wenn Stahl aus Temperaturen über ca. 800°C schnell abgekühlt wird. Das Härtegefüge wird Martensit genannt. Ferner besteht wegen des hohen Martensitanteils eine Gefahr von wasserstoffinduzierten Rissen und die Bruchdehnung ist mit 10% nur gering. Die Schwärzung des Bolzens bringt zusätzlich Wasserstoff in die Schmelze, der beträchtlich die Bruchdehnung und -einschnürung verringert, was zur Versprödung führt.

Aus DE 197 04 513 C1 ist ein Metallschutzgasschweißen mit rotierendem Lichtbogen bekannt, bei dem eine Drahtelektrode mit einem Durchmesser von 0,8 bis 1,6 mm verwendet wird, die während des Schweißens verbraucht wird und ein aus einem ferromagnetischen Material mit einem Anteil von 0,3 bis 1,3 Gewichts-% Si, zusätzlich 0,04 bis 0,14 C und 0,8 bis 2,1 Gewichts-% Mn besteht.

Nachteilig dabei ist, daß das genannte Material ein Verbrauchsmaterial darstellt, das bei einer Schweißung das Schweißmetall bzw. Schweißraupen bildet.

Aus DE 1 079 428 A ist die Verwendung eines Schweißdrahtes für Metallichtbogenschweißung bekannt, bei der als Verbrauchsmaterial ein Schweißdraht mit einem Durchmesser von 2mm niedergeschmolzen wird. Der Schweißdraht besteht aus einem Stahl mit einer Zusammensetzung von 0,05 bis 0,15 % Kohlenstoff, 1 bis 3 % Mangan, 0,6 bis 1,4 % Silicium, Rest Eisen mit den üblichen Verunreinigungen an Schwefel und Phosphor.

Nachteilig dabei ist, daß das genannte Material ein Verbrauchsmaterial darstellt, das bei einer Schweißung das Schweißmetall bzw. Schweißraupen bildet.

Aus GB-A-1 471 740 ist ein Verfahren zum Behandeln von Stangenmaterial bekannt, bei dem eine Stahllegierung verwendet wird, die vorzugsweise aus einem Stahl mit einer Zusammensetzung von 0,10 bis 0,30 % Kohlenstoff, 0,40 bis 1,60 % Mangan, 0,01 bis 1,2 % Silicium, und Phosphor, Schwefel und Aluminium mit unter 0,05 % sowie Stickstoff mit unter 0,01 %, Rest Eisen mit den üblichen Verunreinigungen besteht. Die Stahllegierung wird warm gewalzt, wobei eine feine martensitische Mikrostruktur im Ergebnis erreicht werden soll.

Aus US-A-4 987 288 ist ein Schweißdraht als Verbrauchsmaterial zum Lichtbogenschweißen bekannt, der vorzugsweise aus einem Stahl mit einer Zusammensetzung von 0,05 bis 0,09 % Kohlenstoff, 1,10 bis 1,40 % Mangan, 0,70 bis 1,00 % Silicium, 0,025 % Phosphor, 0,00 bis 0,025 % Schwefel und 0,00 bis 0,30 % Kupfer, Rest Eisen besteht.

Aufgabe der Erfindung ist es daher, eine verbesserte Stahllegierung als Material für einen Schweißbolzen zu schaffen.

Diese Aufgabe wird durch die Merkmale des Anspruchs 1 gelöst.

Überraschenderweise läßt sich ein mit Mangan und Silicium legierter Stahl als Material für einen Schweißbolzen verwenden. Die Stahllegierung kann ohne Aufhärtung verwendet werden. Die Mangan- und Siliciumgehalte sind ausreichend hoch, so daß die Zugfestigkeit und die Streckgrenze erhöht sowie die Kerbschlagzähigkeit verbessert werden. Ein Vorteil solcher Stahllegierungen liegt ferner in Festigkeitswerten bei höherer Bruchdehnung, die ohne Wärmebehandlung, allein durch Kaltumformung erreicht wird. Ein niedriger Kohlenstoffanteil wirkt sich dabei vorteilhaft bei der Schweißbarkeit aus.

Es ist ein Mangan-Silicium-legierter Stahl zur Verwendung als Material für Schweißbolzen vorgesehen, der (in Masse-%)
mehr als 1,3 bis 1,6 % Mn,
mehr als 0,4 bis 0,7 % Si,
mehr als 0,15 bis 0,20 % C,
mehr als 0,05 bis 0,15 V,
bis 0,025 % S,
bis 0,025 % P,
Rest Eisen, einschließlich unvermeidbarer Verunreinigungen aufweist, der zur Erhöhung der Festigkeit einer Kaltumformung unterzogen wurde.

Nach Testergebnissen wies eine Legierung mit einem Kohlenstoffanteil von ungefähr 0,19%, einem Siliciumanteil von ungefähr 0,50%, einem Mangananteil von ungefähr 1,40%, einem Schwefelanteil von unter ungefähr 0,025%, einem Phosphoranteil von unter ungefähr 0,025% und einem Vanadiumanteil von ungefähr 0,10% (jeweils bezogen auf die Masse) eine Bruchdehnung und Festigkeitswerte auf, die der Schraubenqualität 8.8 bei guter Schweißeignung genügt.

Bei einem solchen Mangan-Silicium-Dualphasenstahl, d.h. einem legierten Stahl aus Ferrit mit ca. 20% Martensitinseln im Gefüge durch schnelles Abkühlen aus dem γ-α-Zweiphasenfeld des Eisen-Kohlenstoff-Diagramm, wird das Eigenschaftsprofil durch temperaturkontrolliertes Walzen eingestellt. Daraus resultiert ein feinstreifiger Perlit mit hoher Festigkeit und Zähigkeit. Die gewünschten mechanischen Eigenschaften am Bauteil werden über eine abgestimmte Kombination der Walzdrahtfestigkeit mit der aus Ziehabzug und Formgebung eingebrachten Kaltverfestigung erzielt. Das Dualphasengefüge und ein geringer Kohlenstoffgehalt stellen auch nach hoher Kaltumformung eine gute Kaltzähigkeit sicher. Die Legierung kann als Schweißbolzen, bei denen eine gute Schweißbarkeit und eine hohe Festigkeit gefordert werden, erfolgversprechend eingesetzt werden.

Begünstigend ist in den Legierungen das ferritbildende Element Silicium vorhanden, indem die Diffusion des Kohlenstoffs aus dem Ferrit in den Austenit beschleunigt wird. Durch das Legierungselement Mangan wird eine Umwandlung in der Perlitstufe vermieden.

Weitere Ausgestaltungen der Erfindung sind der nachfolgenden Beschreibung und den Unteransprüchen zu entnehmen.

Die Erfindung wird nachstehend anhand von in den beigefügten schematischen Abbildungen des Ausführungsbeispiels näher erläutert.
Fig. 1 zeigt eine Spannungs-Dehnungskurve eines Zugversuchs für eine erfindungsgemäße Verwendung einer Stahllegierung für einen Schweißbolzen;
Fig. 2 zeigt einen Schweißbolzen als Gewindebolzen mit Teilgewinde;
Fig. 3 zeigt den Schweißbolzen gemäß Fig. 2 nach dem Schweißen;
Fig. 4 zeigt einen Schweißbolzen als Kopfbolzen;
Fig. 5 zeigt den Schweißbolzen gemäß Fig. 4 nach dem Schweißen.

Zur Verwendung als Schweißbolzen wurden Gewindebolzen M 12 x 45 PD, d.h. Gewindebolzen mit Teilgewinde, und Gewindebolzen M 12 x 45 RD, d.h. Gewindebolzen mit reduziertem Schaft getestet, die aus einem thermomechanisch gewalzten Mangan-Silicium-legierten Dualphasenstahl hergestellt wurden. Der Mangan-Silicium-legierte Dualphasenstahl wies Eisen mit einem Anteil von Mangan von ungefähr 1,40 Gewichts-%, von Silicium von ungefähr 0,50 Gewichts-%, von Vanadium von ungefähr 0,1 Gewichts-% und von Kohlenstoff von ungefähr 0,19 % auf. Der Anteil von Schwefel und Phosphor war jeweils kleiner/gleich 0,025 Gewichts-%.

Für den Mangan-Silicium-legierten Dualphasenstahl liegt die ASTM(American Society for Testing Materials)-Klasse der Korngröße zwischen ca. 8 bis 10, so daß die Korngröße gemäß dieser Klassifikation als fein bezeichnet werden kann. Der mittlere Korndurchmesser liegt zwischen ungefähr 5 bis ungefähr 40 µm.

Die jeweiligen Bolzen wurden auf einen 12 mm dicken Grundwerkstoff S235 aufgeschweißt. Es wurde eine Schweißanlage Fabrikat Köster, 2000 E, K 22-D verwendet.

Für die Gewindebolzen M 12 x 45 PD wurde ein Schweißstrom von 750 A, eine Schweißzeit von 350 ms, ein Hub von 1,5 mm, ein Überstand von ca. 4 mm und eine leichte Dämpfung eingestellt. Für die Gewindebolzen M 12 x 45 PD wurde ein Biegewinkel von ca. 60° ohne Bruch des Bolzens ermittelt. Das Drehmoment wurde zu ca. 100 Nm mit Muttern der Qualität 8 ermittelt. Die Schweißeigenschaften sind vergleichbar mit einem Material der Güte 4.8.

Für die Gewindebolzen M 12 x 45 RD wurde ein Schweißstrom von 650 A, eine Schweißzeit von 300 ms, ein Hub von 1,5 mm, ein Überstand von ca. 4 mm und eine Dämpfung eingestellt. Für die Gewindebolzen M 12 x 45 RD wurde ein Biegewinkel von 40° mit Bruch im reduzierten Teil des Bolzens ermittelt. Das Drehmoment wurde zu ca. 90 Nm mit Muttern der Qualität 8 ermittelt. Die Schweißeigenschaften sind vergleichbar mit einem Material der Güte 4.8.

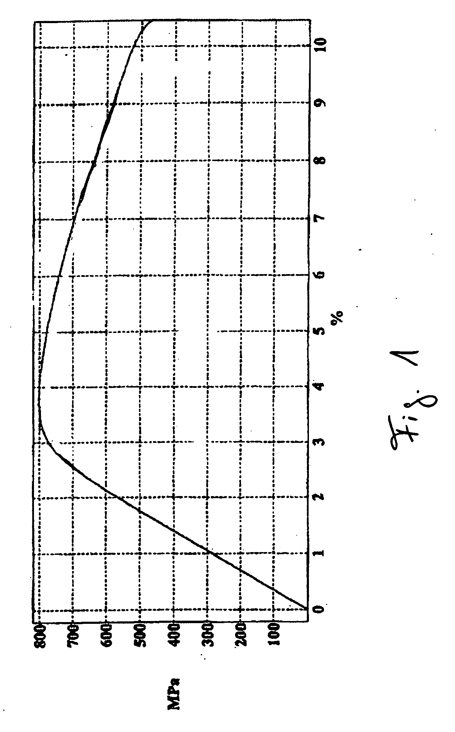

Fig. 1 zeigt das Ergebnis eines Zugversuchs, der zur Prüfung der Festigkeit bei statistischer Belastung an den Gewindebolzen des Mangan-Silicium-legierten Dualphasenstahl durchgeführt wurde. Die Kurve zeigt, daß die Zugfestigkeit Rm, d.h. der Quotient aus der größten Kraft, die während des Versuches an dem Gewindebolzen wirkte, und dem Querschnitt des Gewindebolzens, etwas über 800 N/mm².

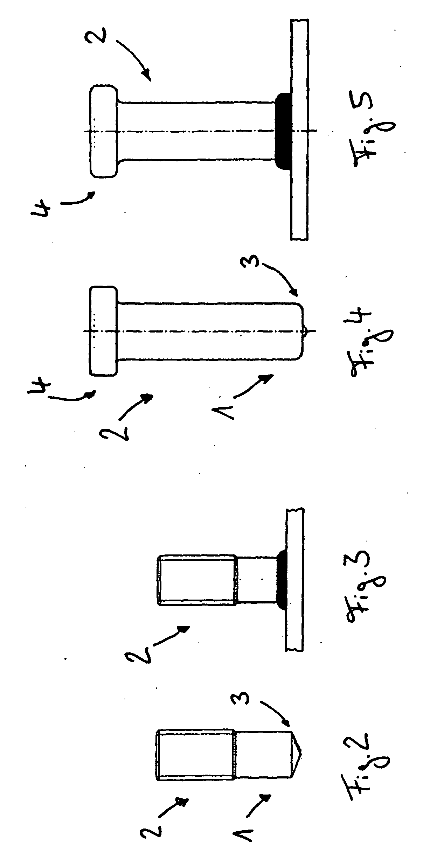

Der in Fig. 2 gezeigte Schweißbolzen, der als Gewindebolzen mit Teilgewinde ausgestaltet ist, weist einen Schweißabschnitt 1 und einen Schaft 2 auf. Der Schweißabschnitt 1 umfaßt eine Schweißzugabe 3.

Fig. 3 zeigt den Schweißbolzen nach dem Schweißen, wobei sich der Schweißbolzen durch das Schweißen verkürzt hat.

Fig. 4 zeigt einen als Kopfbolzen ausgestalteten Schweißbolzen, der neben dem Schaft 2 und der Schweißzugabe 3 einen Kopf 4 aufweist. Fig. 5 zeigt den Kopfbolzen nach dem Schweißen.

An der Schweißzugabe 3 kann eine Zündspitze, wie in den Fig. 2 und 4 dargestellt, vorgesehen sein.

## Patentansprüche

1. Stahllegierung mit (in Masse-%)
mehr als 1,3 bis 1,6 % Mn,
mehr als 0,4 bis 0,7 % Si,
mehr als 0,15 bis 0,20 % C,
mehr als 0,05 bis 0,15 V,
bis 0,025 % S,
bis 0,025 % P,
Rest Eisen, einschließlich unvermeidbarer Verunreinigungen, wobei die Stahllegierung zur Erhöhung der Festigkeit einer Kaltumformung unterzogen wurde, **dadurch gekennzeichnet, dass**
die Stahllegierung in der Form eines Schweißbolzens für ein Bolzenschweißen geformt ist, wobei der Schweißbolzen einen eine Schweißzugabe (3) aufweisenden Schweißabschnitt (1) und einen Schaft (2) aufweist, und eine feinstreifige Perlit-Struktur aus solchen Dualgefügen aufweist, die aus Ferrit mit ca. 20 % Martensitinseln im Gefüge bestehen.

2. Stahllegierung nach Anspruch 1, wobei die Stahllegierung durch die Kaltumformung von mehr als 35 % eine Streckgrenze von über 700 MPa aufweist für eine Güte 8.8.

3. Stahllegierung nach Anspruch 1 oder 2, wobei die Stahllegierung für die Erhöhung der Festigkeit thermomechanisch gewalzt ist.

4. Stahllegierung nach einem der Ansprüche 1 bis 3, mit einem Außengewinde.

5. Stahllegierung nach einem der Ansprüche 1 bis 4, der einen Durchmesser von 5,5 bis 25 mm aufweist.

6. Stahllegierung nach einem der Ansprüche 1 bis 5, wobei der Bolzen einen aufgestauchten Kopf zur Verankerung in Beton aufweist.

## Claims

1. Steel alloy comprising (in % by mass)
more than 1.3 to 1.6% Mn,
more than 0.4 to 0.7% Si,
more than 0.15 to 0.20% C,
more than 0.05 to 0.15% V,
up to 0.025% S,
up to 0.025% P,
remainder iron, including unavoidable impurities, wherein the steel alloy has been subjected to cold forming to increase the strength, **characterized in that**
the steel alloy is shaped in the form of a welding stud for stud welding, wherein the welding stud has a welding portion (1), having a welding allowance (3), and a shank (2), and has a fine-banded pearlite structure made up of those dual microstructures which consist of ferrite with approximately 20% martensite islands in the microstructure.

2. Steel alloy according to Claim 1, wherein the steel alloy has a yield strength of more than 700 MPa for a quality of 8.8 by virtue of the cold forming of more than 35%.

3. Steel alloy according to Claim 1 or 2, wherein the steel alloy is thermomechanically rolled for increasing the strength.

4. Steel alloy according to one of Claims 1 to 3, with an external thread.

5. Steel alloy according to one of Claims 1 to 4, having a diameter of 5.5 to 25 mm.

6. Steel alloy according to one of Claims 1 to 5, wherein the stud has an upset head for anchoring in concrete.

## Revendications

1. Alliage d'acier comportant, en pourcentage en masse :
- plus de 1,3 % et jusqu'à 1,6% de Mn ;
- plus de 0,4% et jusqu'à 0,7% de Si ;
- plus de 0,15 % et jusqu'à 0,20% de C ;
- plus de 0,05 % et 0,15% de V ;
- jusqu'à 0,025% de S ;
- jusqu'à 0,025% de P ;
- le reste en Fe et incluant des impuretés inévitables,
où ledit alliage d'acier a été soumis à une déformation à froid pour l'augmentation de sa résistance, **caractérisé en ce que** ledit alliage d'acier est façonné sous la forme d'un goujon à souder pour un soudage de goujons, et où ledit goujon à souder comporte une section à souder (1) avec une surépaisseur (3) pour le soudage ainsi qu'une tige (2), et comporte également une structure perlitique finement lamellée de microstructures duales constituées structurellement de ferrite avec environ 20% de martensite.

2. Alliage d'acier selon la revendication 1, où ledit alliage d'acier a une limite d'élasticité de plus de 700 MPa obtenue par ladite déformation à froid de plus de 35%, pour une qualité 8.8.

3. Alliage d'acier selon la revendication 1 ou 2, où ledit alliage d'acier est laminé thermo-mécaniquement pour l'augmentation de sa résistance.

4. Alliage d'acier selon l'une des revendications 1 à 3, avec un filetage extérieur.

5. Alliage d'acier selon l'une des revendications 1 à 4, qui comporte un diamètre de 5,5 à 25 mm.

6. Alliage d'acier selon l'une des revendications 1 à 5, **caractérisé en ce que** ledit goujon comporte une tête saillante pour l'ancrage dans du béton.
